# EUROPÄISCHE PATENTSCHRIFT

(11) **EP 2 082 141 B1**
(45) Veröffentlichungstag und Bekanntmachung des Hinweises auf die Patenterteilung: **01.05.2013**
(21) Anmeldenummer: 07817700.3
(22) Anmeldetag: 19.10.2007
(51) Int. Cl.: F16B 13/00, F16B 13/08, F16B 13/12, F16B 13/14

(54) **DÜBEL FÜR EINE DECKPLATTENEINSPREIZUNG**
ANCHOR FOR EXPANSION IN COVER PANELS
CHEVILLE À EXPANSION POUR INSERTION DANS UNE PLAQUE DE RECOUVREMENT

(30) Priorität: 19.10.2006 DE 102006049921
(43) Veröffentlichungstag der Anmeldung: 29.07.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2007/001865
(87) Internationale Veröffentlichungsnummer: WO 2008/046410

(56) Entgegenhaltungen:
- EP-A- 1 116 831
- DE-U- 7 412 185
- GB-A- 1 239 375

## Beschreibung

Die Erfindung betrifft einen Dübel zur Befestigung an - in Stützkernbauweise gefertigten - flächigen Bauteilen mit einer ersten und einer zweiten Deckplatte und mindestens einer Stützkernzwischenlage, wobei der Dübel mindestens einen Spreizkörper und mindestens einen Keilkörper umfasst und wobei der Keilkörper in den Spreizkörper zumindest bereichsweise eingesteckt ist.

Die flächigen Bauteile in Stützkernbauweise werden oft auch als Sandwichplatten, Wabenplatten oder Leichtbauplatten bezeichnet. Alle Plattentypen haben im Möbelbau in der Regel Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. PolyurethanSchaum oder Polystyrol. Bei den wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge z.B. durch Anschrauben befestigt werden, hat man das Problem, dass die Befestigungsmittel in der Regel nur an den relativ dünnen Decklagen bzw. Deckplatten Halt finden. Eine typische Lösung hierfür sind Spreizdübel, wie sie in der Druckschrift DE 20 2004 000 474 U1 offenbart sind. Die Spreizdübel haben jedoch den Nachteil, dass sie vorn und hinten die obere Platte großflächig umgreifen. Der hintere Umgriff verdrängt zudem weiträumig das Stützkernmaterial in der Umgebung der Bohrung, wodurch sich bei einer auf den Dübel wirkenden Zuglast die Deckplatte schneller vom Kernmaterial löst und abhebt.

Ein anderer Dübel, der diesen Nachteil vermeidet, ist aus dem Internetkatalog (September 2006) des Unternehmens Fischer Befestigungssysteme GmbH bekannt. Er wird dort unter der Bezeichnung SLM-N geführt. Der Dübel hat einen rohrförmigen Spreizkörper, in dessen Bohrung ein zumindest bereichsweise kegelstumpfförmiger Keilkörper am hinteren, geschlitzten Spreizkörperende eingesteckt ist. Der Keilkörper hat eine zentrale Bohrung mit Innengewinde. Wird der Keilkörper zum Beispiel durch das Anziehen einer im Gewinde des Keilkörpers sitzenden Halteschraube in den Spreizkörper hineinbewegt, spreizt sich dieser unter Festklemmen im unteren Bereich der Bohrung. Allerdings würde dieser Dübel nur in einem sehr formsteifen Kernmaterial fest sitzen.

Aus der EP 1 116 831 A1 ist ein zweiteiliger Dübel für Bohrlöcher mit Hinterschneidung bekannt. In einer unten geschlitzten Dübelhülse steckt ein Keilbolzen. Im Bereich der Schlitze ist die Bohrung der Dübelhülse konisch verengt. Wird der Keilbolzen in die Verengung der Dübelhülse eingetrieben, spreizt sich das hintere Ende der Dübelhülse, um sich in der Bohrlochhinterschneidung zu verklemmen.

Der vorliegenden Erfindung liegt das Problem zugrunde, einen Dübel für Leichtbauplatten zu entwickeln, der bei einfacher Montage fest, sicher und dauerhaft in der Leichtbauplatte hält. Eine Montage an oder in festen Platteneinlagen oder an den jeweiligen Plattenriegeln ist hierbei nicht vorgesehen. Das Problem wird mit den Merkmalen des Anspruchs 1 gelöst. Dazu ist der Dübel zumindest bereichsweise in eine Ausnehmung der Leichtbauplatte setzbar. Der Spreizkörper hat eine Abstützzone mit mindestens zwei spreizbaren Klemmelementen. Der Keilkörper weist mindestens ein eine Zug-, Schub- oder Verdrehbewegung übertragendes Getriebeelement auf. Der Keilkörper weist ferner mindestens ein Getriebeelement zur Spreizung der Klemmelemente auf. Letztere sind vor und nach der Dübelmontage vollständig innerhalb der Abstützzone angeordnet. Die die Zug-, Schub- oder Verdrehbewegung übertragenden Getriebeelemente sind in der Ausnehmung der Leichtbauplatte lösbar mit den spreizenden Getriebeelementen wirkverbunden. Die Abstützzone des Spreizkörpers ist - mit dem oder den Getriebeelementen des Keilkörpers ein Getriebe bildend - in der sacklochausnehmung der zweiten Deckplatte radial verklemmt anlegbar.

Mit der vorliegenden Erfindung wird ein Dübel für Leichtbauplatten geschaffen, der bei hoher Auszugskraft sowohl manuell als auch maschinell schnell und sicher gesetzt werden kann. Der Dübel weist in der Abstützzone ein Getriebe auf, über das speziell die Abstützzone beim Dübeleinbau aufgespreizt wird. Das jeweilige Getriebe ist beispielsweise ein Schiebekeilgetriebe, bei dem ein Schiebekeil über eine abreißbare Zugstange betätigt wird. Das Getriebe kann auch ein Spreizgetriebe sein, dessen z.B. sternförmiges Spreizelement durch eine externe Schubstange betätigt wird. Auch ein Exzentergetriebe ist denkbar, bei dem der Keilkörper gegenüber dem Spreizkörper verschwenkt wird.

Weitere Einzelheiten der Erfindung ergeben sich aus den Unteransprüchen und den nachfolgenden Beschreibungen schematisch dargestellter Ausführungsformen.
- Figur 1:: Dimetrische Darstellung eines gespreizten Dübels;
- Figur 2:: Ungespreizter Spreizkörper zu Figur 1;
- Figur 3:: Keilkörper zu Figur 1 mit Zugstab;
- Figur 4:: In Leichtbauplatte eingesteckter Spreizkörper;
- Figur 5:: Montierter Dübel zum Spreizkörper nach Figur 4;
- Figur 6:: Wie Figur 1, jedoch mit anderem Längsschlitz und teilweise eingestecktem Keilkörper;
- Figur 7:: Vergrößerung von Detail aus Figur 6;
- Figur 8:: Darstellung der Leichbauplattenbohrung;
- Figur 9:: Dübel mit konischem Zugkeil;
- Figur 10:: wie Figur 9, jedoch mit gespreizten Klemmelementen;
- Figur 11:: Dübel mit kugelförmigem Zugkeil;
- Figur 12:: wie Figur 11, jedoch mit gespreizten Klemmelementen;
- Figur 13:: Dübel mit Spreizgetriebe;
- Figur 14:: wie Figur 13, jedoch mit gespreizten Klemmelementen;
- Figur 15:: Draufsicht auf eine Membranfeder;
- Figur 16:: Querschnitt durch einen unverformten Dübel mit Exzenterspreizung;
- Figur 17:: Querschnitt durch einen verformten Dübel mit Exzenterspreizung.

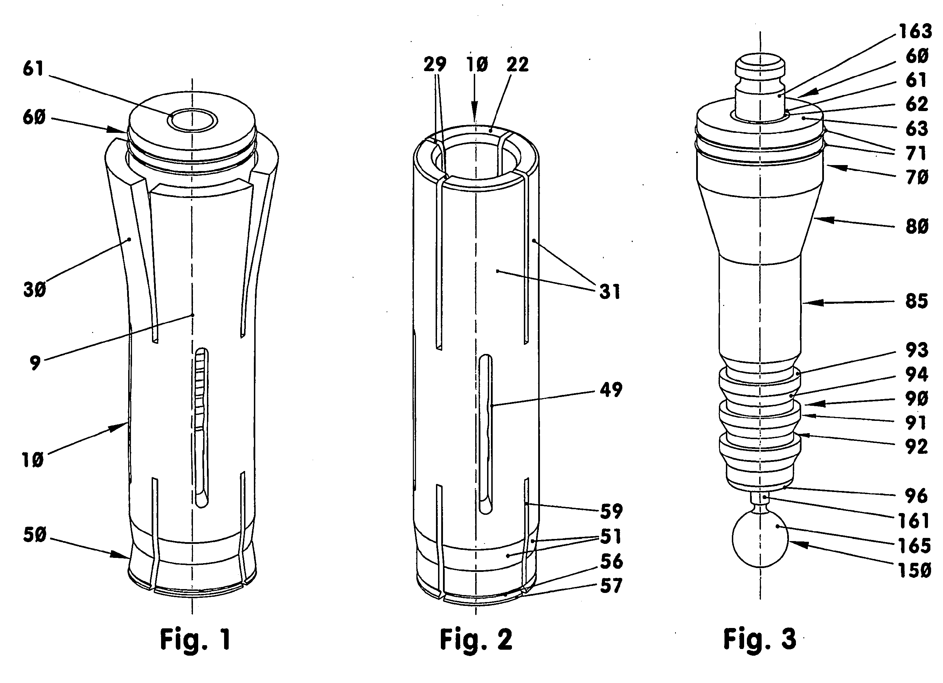

Die Figur 1 zeigt einen gespreizten Dübel in der Gestalt, wie er sie nach dem Einbau in einer Leichtbauplatte hätte. Der Dübel hat hier nur zwei Teile, einen Spreizkörper (10) und einen Keilkörper (60). Beide Teile (10, 60) sind in den Figuren 2 und 3 separat dargestellt. Der Dübel nach Figur 1 hat beispielsweise eine Länge von 37,5 Millimetern. Das zum Setzen des Dübels gebohrte Loch hat z.B. einen Durchmesser von 8,5 Millimetern. Der Durchmesser des unverformten Dübels ist bei dieser Konstruktion entweder maximal um den Faktor drei größer als der Kerndurchmesser der mit dem Dübel in der Leichtbauplatte zu befestigende Schraube oder maximal um den Faktor 2,3 größer als der Nenndurchmesser der in den Dübel eingeschraubten Schraube.

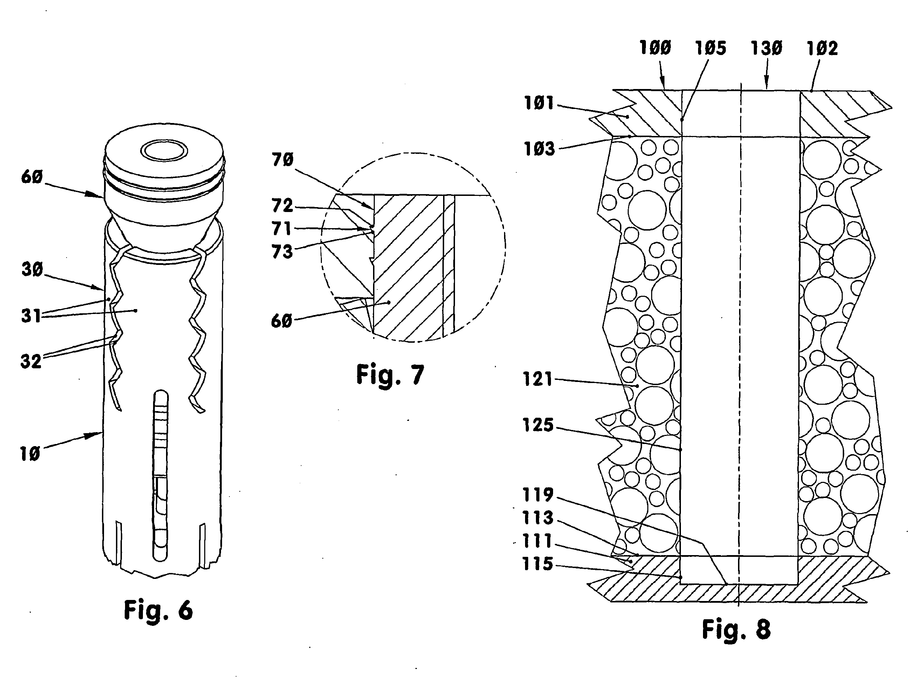

Der Dübel dient z.B. der Beschlagsbefestigung in Leichtbauplatten (100) ohne Riegel und festen Einlagen, vgl. Figur 8. Die gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innenliegenden Oberflächen (103, 113) mit dem plattenförmigen Stützkern (121) verklebt. Die dargestellte Leichtbauplatte hat eine Wandstärke von 37,5 Millimetern. Jede Deckplatte ist hier vier Millimeter dick. Statt des Schaumkerns kann sie u.a. auch einen Wabenkern haben. In der Leichtbauplatte befindet sich eine Bohrung (130), die sich aus den Abschnitten (105), (125) und (115) zusammensetzt. Letzterer Abschnitt (115) ist eine Sacklochbohrung. Ihre Tiefe beträgt hier 75% der Materialstärke der unteren Deckplatte (111). Ggf. kann anstelle der Sacklochbohrung (115) eine Durchgangsbohrung verwendet werden.

Die Leichtbauplatte (100) kann auch gewölbt, z.B. zylindrisch oder sphärisch, ausgeführt sein, sofern die Materialstärke des Stützkerns (121) zumindest annähernd konstant ist.

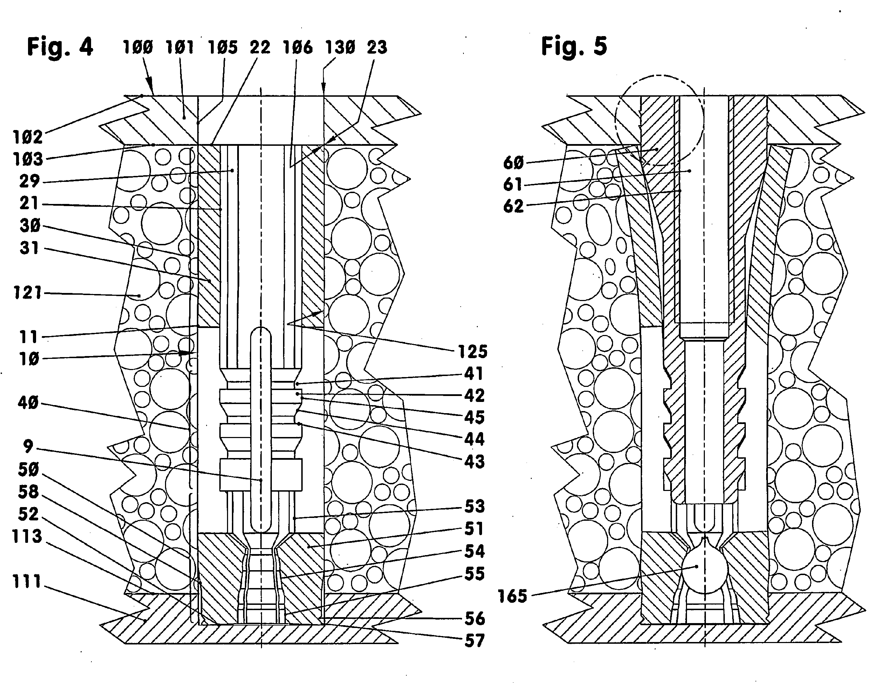

Nach Figur 4 hat der Spreizkörper (10) im Wesentlichen die Form eines Rohres, d.h. er ist ein rohrförmiger Körper mit einer oberen (22) und einer unteren Stirnfläche (52). Der Spreizkörper (10) ist in drei Bereiche aufgeteilt: einen Hintergriffsabschnitt (30), eine Verrastungszone (40) und einen Abstützabschnitt (50).

Nach den Figuren 1 und 2 ist der obere, z.B. zylinderrohrförmige Bereich des Spreizkörpers (10), der Hintergriffsabschnitt (30), mit z.B. vier geraden Längsschlitzen (29) versehen. Die Schlitze (29) können auch wendelförmig gekrümmt sein. Sie separieren vier Hintergriffselemente (31). Die Länge der Längsschlitze (29) beträgt beispielsweise 40 bis 60% der Spreizkörpergesamtlänge. Ihre Breite beträgt im Ausführungsbeispiel 0,5 Millimeter und ist beim unverformten Dübe1 z.B. über die gesamte Länge konstant. Die Längsschlitze (29) haben eine 90°-Teilung. Ggf. sind die Längsschlitze (29) spiralförmig gewunden. Zur Kerbentlastung können die Längsschlitze (29) auch in radial angeordneten Entlastungsbohrungen enden.

In Figur 6 ist ein Spreizkörper (10) gezeigt, der nur beispielhaft einen zick-zack-, mäander- oder zinnenförmigen Längsschlitz (29) hat. Bei einem unbeabsichtigten Verdrehen des eingebauten Dübels im Bereich des Stützkerns (121) - durch das Eindrehen einer nicht dargestellten Schraube in den Dübel - kontaktieren sich gegenseitig abstützend ein Teil der Hintergriffsflankenabschnitte (32) der benachbarten Hintergriffselemente (31).

Im Bereich der Hintergriffselemente (31) ist die Innenwandung (21) des Spreizkörpers (10) zylindrisch geformt.

Der Spreizkörper (10) hat am oberen Ende des Hintergriffsabschnitts (31) eine Stirnfläche (22), die hier eben ausgeführt ist. Ggf. kann sie auch die Form eines flachen Kegelstumpfmantels haben, dessen fiktive Spitze auf der Mittellinie (9) des Dübels oberhalb oder unterhalb des oberen Spreizkörperendes liegt. In einem solchen Fall ist als Kegelwinkel z.B. ein Winkel von 156 Winkelgraden vorgesehen.

Da der Spreizkörper (10) eine Länge hat, die gleich oder geringfügig kleiner ist als der kürzeste Abstand zwischen der innenliegenden Oberfläche (103) der Deckplatte (101) und dem Boden (119) der Sacklochbohrung (115), liegt die Stirnfläche (22) im Rahmen der üblichen Toleranzen in der Ebene der innenliegenden Oberfläche (103) der oberen Deckplatte (101). Nach Figur 4 liegt die Außenkante (23) der Stirnfläche (22) gegenüber der innenliegenden Kante (106) der Bohrung (105). Die Stirnfläche (22) ist beispielsweise an ihrer Innen- und Außenkante angefast oder abgerundet, vgl. Figur 2.

Unterhalb der Hintergriffselemente (31) liegt eine Verrastungszone (40). Letztere besteht beispielsweise aus drei Raststollen (41) und drei Rastkerben (42), die jeweils wechselweise hintereinander angeordnet sind. Der einzelne, ringförmige und mehrmals unterbrochene Raststollen (41) hat im Einzelquerschnitt ein Sägezahnprofil. Die Raststollenteilung beträgt ca. ein Viertel des Spreizkörperdurchmessers.

Der einzelne Raststollen (41) hat eine Gleitflanke (44) und eine Rastflanke (43). Die Rastflanke (43), die nach den Figuren 4 und 5 immer unterhalb der Gleitflanke (44) des gleichen Raststollens (41) liegt, ist Teil einer Ebene, die normal zur Mittellinie (9) orientiert ist. Die Gleitflanke (44) hat die Form eines Kegelstumpfmantels. Der Kegelwinkel des Mantels beträgt z.B. 60 Winkelgrade, wobei die gedachte Spitze, sie liegt auf der Mittellinie (9), immer unterhalb der Rastflanke (43) desselben Raststollens (41) liegt.

Ggf. hat auch die Gleitflanke (44) - zur Verstärkung der Hintergriffswirkung - die Form eines Kegelstumpfmantels, dessen gedachte Spitze im Bereich desselben Raststollens (41) oder sogar darüber liegt.

Der Nutgrund (45) der Rastkerben (42) hat einen Durchmesser, der dem Durchmesser der zylindrischen Innenwandung (21) des Hintergriffsabschnitts (30) entspricht.

Im Bereich der Verrastungszone (40) befinden sich hier vier Entlastungsschlitze (49), die parallel zur Dübelmittellinie (9) orientiert sind. Sie sind jeweils gegenüber den Längsschlitzen (29) um 45 Winkelgrade versetzt angeordnet. Die an ihren Enden ausgerundeten Entlastungsschlitze (49) können nach oben und nach unten ggf. 0,1 bis 3 Millimeter über die Verrastungszone überstehen. Die Breite der Entlastungsschlitze (49) ist doppelt so groß wie die Breite der Längsschlitze (29). Im Ausführungsbeispiel beträgt sie ein Millimeter.

An die Verrastungszone (40) des Spreizkörpers (10) schließt sich nach unten hin der zumindest bereichsweise zylindrische Abstützabschnitt (50) an. Seine Außenkontur, die z.B. eine zentrale Ausnehmung (53-55) umgibt, endet mit der Stirnfläche (52). Der obere Teil (53) der Ausnehmung hat einen Durchmesser, der dem minimalen Durchmesser der Raststollen (41) entspricht. Der mittlere Teil (54) der Ausnehmung hat z.B. zumindest annähernd die Form des Mantels eines geraden Kegelstumpfs, dessen Spitzenwinkel z.B. 16 Winkelgrade beträgt. Das mittlere Ausnehmungsteil (54) verjüngt sich nach oben hin. An ihn schließt sich unten ein z.B. kurzer zylindrischer Ausnehmungsabschnitt (55) an. Die Stirnfläche (52) hat hier ebenfalls die Form eines Kegelstumpfmantels, dessen Spitzenwinkel 172 Winkelgrade beträgt. Die fiktive Kegelspitze liegt auf der Mittellinie (9) innerhalb des Bereichs des zylindrischen Abschnitts (55).

Der Spreizkörper (10) sitzt mit der Abstützzone (50) - im Einbauzustand - in Radialrichtung festgeklemmt in der Sacklochbohrung (115), vgl. Figur 8 i.V.m. Figur 5. Die in die Sacklochausnehmung (115) der Deckplatte (111) hineinragende Abstützzone (50) des Spreizkörpers (10) hat eine Länge, die 30 bis 80% der Wandstärke der Deckplatte (111) entspricht. Sie hat eine besondere Außenkontur. Sie teilt sich - beim unverformten Spreizkörper nach Figur 4 - in einen kegelmantelförmigen (58) und einen zylindermantelförmigen Bereich auf. Der Bereich (58) hat einen Spitzenwinkel von 164 Winkelgraden. Der Durchmesser des zylindrischen Bereichs ist um ca. 0,4 Millimeter kleiner als der Außendurchmesser der Außenkontur (11). Die Länge des zylindrischen Bereichs ist größer als die Tiefe der Bohrung (115).

Am unteren Rand des zylindrischen Bereichs der Außenkontur befindet sich zur Ausbildung eines Klemmsteges (57) eine umlaufende Kerbe (56). Die Kerbe (56) hat einen dreiecksförmigen Einzelquerschnitt. Die Kerbtiefe beträgt 0,2 bis 0,5 Millimeter. Die Flanken der Kerbe (56) schließen beispielsweise einen Winkel von 90 Winkelgraden ein. Die untere Flanke der Kerbe (56) ist von der Stirnfläche (52) z.B. 0,2 bis 0,5 Millimeter entfernt.

Alternativ zu der durch die Kerbe (56) und den Klemmsteg (57) gebildeten Struktur, kann die Außenkontur der Abstützzone (50) auch ein ein- oder mehrgängiges Gewinde, eine umlaufende Querriffelung oder eine Noppenstruktur aufweisen.

Die Abstützzone (50) hat wie der Hintergriffsabschnitt (30) z.B. vier Längsschlitze, vgl. Figuren 1 und 2. Die Länge der Schlitze (59) beträgt beispielsweise 25 bis 35% der Spreizkörpergesamtlänge. Ihre Breite beträgt im Ausführungsbeispiel 0,5 Millimeter und ist beim unverformten Dübel z.B. über die gesamte Länge konstant. Die Längsschlitze (59) haben eine 90°-Teilung und liegen z.B. in der gedachten verlängerung der Schlitze (29). Zur Kerbentlastung können die Längsschlitze (29) auch in radial angeordneten Entlastungsbohrungen enden.

Die Stirnfläche (52) des Spreizkörpers (10) kontaktiert mit ihrem äußeren Rand den Boden (119), vgl. Figur 8, der Sacklochbohrung (115) in der Regel ohne nennenswertes axiales Spiel.

Die Stirnfläche (52) des Spreizkörpers (10) kann auch konkav gewölbt sein oder eine Struktur aufweisen, so dass sie auch hier nur mittels Linienberührung, punktuell oder partiell den Boden (119) berührt. Die Rauhtiefe einer ggf. verwendeten Struktur liegt beispielsweise unter 0,5 Millimetern.

In Figur 3 ist ein Keilkörper (60) dargestellt, vgl. auch Figur°5. Die gezeigten Keilkörper (60) sind zumindest bereichsweise rotationssymmetrische Bauteile. Sie haben hier drei Abschnitte: einen Sitzabschnitt als Zylinderzone (70), einen Spreizabschnitt als Keilzone (80), ggf. ein Zwischenabschnitt (85) und eine Verrastungszone (90).

Der Keilkörper (60) hat eine zentrale Bohrung (61) mit beispielsweise einem metrischen Innengewinde (62), vgl. Figur 5. Das Gewinde (62) der Bohrung (61) endet in den Ausführungsbeispielen kurz vor der Verrastungszone (90).

Alternativ kann die Bohrung (61) zur Aufnahme von nichtmetrischen Schrauben, z.B. Spanplattenschrauben oder Holzschrauben, einen rechteckigen, ovalen, polygonförmigen oder sternförmigen Querschnitt haben. Ggf. verjüngt sich der Ausnehmungsquerschnitt von Bohrungsbeginn zum Bohrungsende hin.

Der Sitzabschnitt (70) des Keilkörpers (60) hat eine im Wesentlichen zylindrische Außenkontur, vgl. Figur 3. Dieser Abschnitt (70) sitzt bei einem in der Leichtbauplatte (100) montierten Dübel in der Bohrung (105) der oberen Deckplatte (101) ggf. mit einer Presspassung. Nach Figur 5 ragt ein Viertel bis ein Drittel der Länge des Sitzabschnitts (70) zusätzlich in den Bereich des Stützkerns (121) hinein. Der rein zylindrische Bereich des Sitzabschnitts (70), die Zylinderzone, hat hier einen Außendurchmesser, der dem Innendurchmesser der Bohrung (105) entspricht. In Figur 3 und 5 hat der Sitzabschnitt (70) zwei umlaufende Widerhakenstege (71). Die geschlossenen, ringförmigen Stege (71) haben einen dreieckigen Einzelquerschnitt, vgl. Figur 5, mit einer Stützflanke (72) und einer Rutschflanke (73), vgl. Figur 7. Sie stehen z.B. 0,15 Millimeter über die dortige zylindrische Außenkontur über. Sie bewirken u.a. ein verdrehsicherndes Verklemmen des Keilkörpers (60) in der Bohrung (105). Zusätzlich dichten sie die Montagefuge zwischen dem Keilkörper (60) und der Leichtbauplatte (100), so dass dort weder Schmutz noch Feuchtigkeit eindringen kann. Auch kann auf diese Weise kein Stützkernmaterial in die Umgebung gelangen.

Alternativ hierzu kann der Sitzabschnitt (70) auch eine Vielzahl von Längsstegen, z.B. 15, aufweisen. Alle Stege verlaufen parallel zur Mittellinie (9) des Dübels. Auch hier hat jeder Steg (74) einen dreieckigen Querschnitt, wobei seine Flanken z.B. einen 90°-Winkel einschließen. Ggf. nimmt der Querschnitt der Stege (74) von oben nach unten zu. Dies erhöht die Dichtigkeit der Montagefuge.

An dem Sitzabschnitt (70) schließt sich der Spreizabschnitt (80) bzw. die Keilzone an. Letztere besteht aus einem Kegelstumpf, dessen fiktive Spitze in der darunter liegenden Zone (85) oder (90) auf der Mittellinie (9) angeordnet ist.

Der Spitzenwinkel liegt zwischen 30 und 45 Winkelgraden. Im Ausführungsbeispiel beträgt er 33,4°. Der minimale Außendurchmesser der Keilzone (80) entspricht dem Innendurchmesser des unverformten Hintergriffsabschnitts (30) des Spreizkörpers (10).

Im Ausführungsbeispiel folgt auf den Spreizabschnitt (80) der zylindrische Zwischenabschnitt (85) und die Verrastungszone (90). Mindestens das der Verrastungszone (90) zugewandte Ende des Zwischenabschnitts (85) hat als Außendurchmesser den Innendurchmesser des unverformten Hintergriffsabschnitts (30). Unabhängig von den Darstellungen der Figuren 3 und 5 kann die Keilzone (80) und der Zwischenabschnitt (85) zu einem rotationssymmetrischen Spreizabschnitt zusammengefasst werden, wobei sich die Querschnitte dieses neuen Spreizabschnittes kontinuierlich und stetig von der Verrastungszone (90) zur Zylinderzone (70) zumindest bereichsweise nichtlinear vergrößern, vgl. Figur 7. Dort liegen die Hintergriffselemente (31) zumindest bereichsweise am Keilkörper (60) an.

Die Verrastungszone (90) des Keilkörpers (60) hat einen vergleichbaren Aufbau wie die Verrastungszone (40) des Spreizkörpers (10). Von oben nach unten folgt dreimal ein Raststollen (91) einer Rastnut (92), vgl. Figur 3. Die Teilung und die Profilform sind aus der zuvor beschriebenen Verrastungszone (40) bekannt. Auch hier haben die Raststollen (91) jeweils eine ebene Stützflanke (93). Allerdings liegt sie pro Raststollen (91) oberhalb der dortigen Gleitflanke (94).

Nach den gezeigten Figuren erfolgt die Verrastung ausschließlich in der separaten Verrastungszone (40, 90). Es ist jedoch auch möglich, die Verrastungszone teilweise oder vollständig z.B. in die Keilzone (80) bzw. in den Bereich der Hintergriffselemente (31) und/oder Klemmelemente (51) zu verlegen. Die Verrastungszone (90) schließt mit einem Boden (96) ab.

Der Spreizkörper (10) und der Keilkörper (60) sind z.B. aus einem Polyamid gefertigt.

Um den Dübel montieren zu können wird die erste Deckplatte (101) und der Stützkörper (121) durchbohrt, vgl. Figur 8. Die zweite Deckplatte (111), die im Ausführungsbeispiel vier Millimeter dick ist, wird 2,5 Millimeter tief aufgebohrt. Die Deckplatte (111) wird also nicht durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden, z.B. Wenn die Sacklochbohrung (115) der unteren Deckplatte (111) einen kleineren Durchmesser haben soll als die restliche Bohrung (105, 125).

Die Sacklochbohrung (115) kann anstelle einer zylindrischen Innenkontur auch eine kegelstumpfmantelförmige Kontur haben. Die Abstützzone (50) hat dann eine entsprechend angepasste Außenkontur. Ferner kann die Sacklochbohrung (115) statt eines kreisförmigen Querschnittes auch einen rechteckigen, dreieckigen oder polygonalen Querschnitt haben, sofern es das jeweilige Fertigungsverfahren zulässt. Ebenso ist es nicht erforderlich, dass die Abstützzone - vor dem Festklemmen - formgenau in die Sacklochausnehmung (115) hineinpasst. Ggf. hat die Außenkontur der Abstützzone (50) eine z.B. längsgerillte Profilierung, über die sie verdrehsicher und spielfrei in der Ausnehmung (115) festgeklemmt ist.

Die entstandene Ausnehmung, bzw. Bohrung (130) wird beispielsweise mit Pressluft freigeblasen oder leergesaugt.

In die leere Bohrung (130) wird der Spreizkörper (10) nach Figur 4 in voller Länge eingesteckt, so dass er zum einen am Boden (119) der Sacklochbohrung (115) der unteren Deckplatte (111) ansteht und zum anderen mit seiner Stirnfläche (22) auf der Höhe der innenliegenden Oberfläche (103) der oberen Deckplatte (101) abschließt. Der Spreizkörper (10) sitzt z.B. bei Schaumkernen mit geringem Spiel im Bohrungsabschnitt (125).

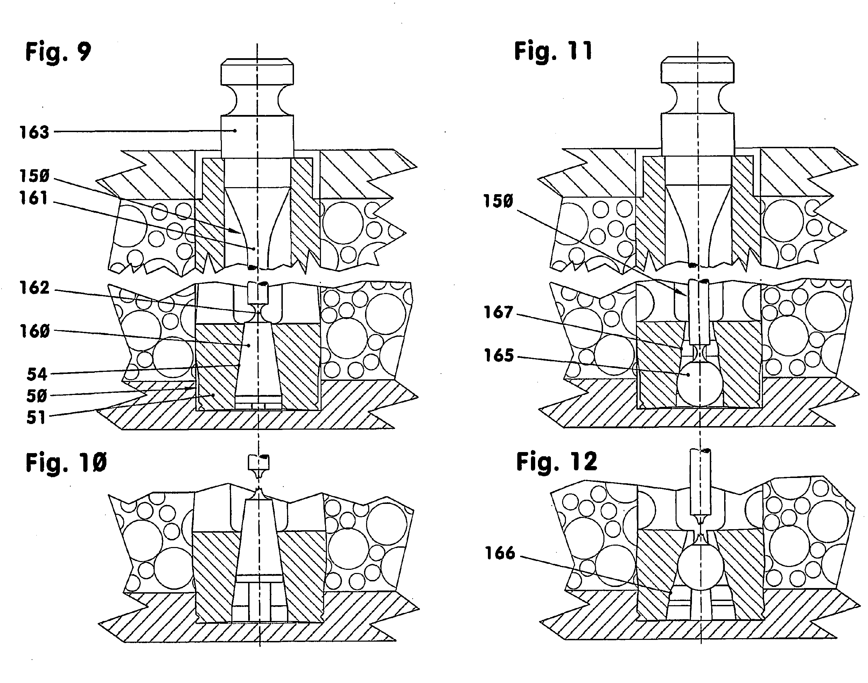

Vor dem Einstecken wird bei der Ausführungsvariante nach den Figuren 1 bis 5 in den Spreizkörper (10) von unten her vorab ein weiterer Keilkörper (150) eingesetzt. Der Keilkörper (150), der bei dieser Ausführungsvariante im Folgenden als Zugelement bezeichnet wird, besteht hier aus einer Zugkugel (165), einer Zugstange (161) und einem Zuganker (163). Das Zugelement (150) wird im Spreizkörper (10) so eingesetzt, dass die Zugkugel (165) in einer Parknut (166), vgl. Figuren 11 und 12, zur Anlage kommt.

Zum Einsetzen des Keilkörpers (60) in den Spreizkörper (10) wird der Keilkörper (60) auf das aus dem Spreizkörper (10) herauskragende Zugelement (150) gesteckt.

Beim Einschieben des Keilkörpers (60) in die Bohrung (21, 51) des Spreizkörpers (10) drückt die Keilzone (80) des Keilkörpers (60) die Hintergriffselemente (31) des Spreizkörpers (10) elastisch auseinander, so dass diese hintergreifend unter die innenliegende Oberfläche (103) der ersten Deckplatte (101) geschoben werden. Die Stirnfläche (22) kann dabei so konstruiert werden, dass sie vollflächig an der Oberfläche (103) zur Anlage kommt.

Mit dem Beenden der Einschiebebewegung des Keilkörpers (60) sitzt die Zylinderzone (70) mit radialer Restspannkraft im Bohrungsabschnitt (105) und schließt zumindest annähernd bündig mit der außenliegenden Oberfläche (102) der ersten Deckplatte (101) ab. Ggf. ist die obere, ebene Stirnfläche (63) des Keilkörpers (60) ein bis drei Zehntel Millimeter unterhalb der außenliegenden Oberfläche (102) der Deckplatte (101) angeordnet.

Am Ende der Spreizbewegung der Hintergriffselemente (31) und der Klemmelemente (51) verrasten die Raststollen (91) des Keilkörpers (60) unlösbar in den Rastkerben (42) des Spreizkörpers (10). Während der drei dabei entstandenen Rastsprünge hat sich der Spreizkörper (10) jeweils kurzzeitig tonnenförmig aufgedehnt. Die Entlastungsschlitze (49) des Spreizkörpers (10) haben sich dazu temporär elastisch aufgeweitet. Nach Abschluss des Rastvorganges nimmt der Spreizkörper (10) im Bereich der Verrastungszone (40) wieder seine zylindrische Kontur (11) an.

Abschließend wird die Zugkugel (165) über die Zugstange (161) aus der Parknut (166) in die Nut (167) bewegt, vgl. Figuren 11 und 12. Damit wird ein Aufspreizen der in der Bohrung (115) sitzenden, elastischen Klemmelemente (51) bewirkt, vgl. auch Figur 5. Der Klemmsteg (57) krallt sich in der Wandung der Sacklochbohrung (115) fest. Der Klemmsteg (57) ist somit zumindest bereichsweise formschlüssig in das Material der unteren Deckplatte (111) eingepresst.

Sobald die Zugkugel (165) in der Nut (167) sitzt, reißt die Zugstange (161) an einer oberhalb der Zugkugel (165) gelegenen Sollbruchstelle (162) ab.

Ein z.B. zu montierender Beschlag kann nun mit einer Schraube in der Bohrung (61) des Keilkörpers (60) befestigt werden.

Im Holzmöbelbau basiert die Befestigungsstabilität einer Beschlagbefestigung nicht nur auf dem Auszugswiderstand der in den tragenden Dübeln sitzenden Schrauben, sondern auch im Begrenzen der Setzbeträge und im Vermeiden eines Lösespiels quer zur Mittellinie der jeweiligen Schraube. Der hier vorgestellte Dübel sitzt quer zur Dübelmittellinie (9) zum einen über die Zylinderzone (70) fest in der Bohrung (105) der ersten Deckplatte (101). Zum anderen steckt seine Abstützzone (50) festgeklemmt in der zweiten Deckplatte (111). Das bedingt zwei Wirkungen zur Förderung der Dübelhaltekraft. Zum einen übernimmt die untere Deckplatte durch das Einkeilen des Fußabschnitts (50) in die Bohrung (115) einen Teil der Dübelhaltekraft. Zum anderen wird der Dübel, bezüglich seiner Lage quer zur Dübelmittellinie (9), form- und kraftschlüssig fixiert. Da zudem der Dübe1 biegefest konstruiert ist, neigen die Schrauben in den Dübeln nicht zu einem das Lösen der Verbindung beschleunigenden Schrägstellen, so dass die Gefahr des unbeabsichtigten Lockerns oder Lösens des Beschlags minimiert oder sogar verhindert wird.

In den Ausführungsbeispielen ist der Keilkörper bezüglich seiner Außenkontur zumindest großteils ein rotationssymmetrischer Körper. Alternativ hierzu können seine einzelnen Querschnitte oder zumindest ein Teil davon auch quadratische, polygonale, ovale oder anders profilierte Querschnitte haben. Ggf. kann der Keilkörper (60) mit dem Spreizkörper (10) z.B. in der Verrastungszone über ein Gewinde verbunden sein, so dass der Keilkörper (60) nicht in einer linearen, nichtrotierenden Rastbewegung, sondern über eine Einschraubbewegung montiert wird. Bei dem Verwenden eines Gewindes wird in der Montagefuge zwischen dem Spreizkörper (10) und dem Keilkörper (60) ein Rastgesperre oder ein Rastgehemme angeordnet, so dass der Keilkörper (60) nach der Montage nicht mehr oder nur mit großem Aufwand herausgedreht werden kann.

Anstelle der form- und/oder kraftschlüssigen Verbindung von Spreizkörper und Keilkörper durch Verrastungszonen oder Gewinde ist auch eine Bajonettverriegelung denkbar. Die Verbindung durch ein Gewinde oder eine Bajonettverriegelung wird im Verhältnis zu den Verrastungszonen als gleichwertig und gleichwirkend betrachtet.

Die Figuren 9 und 10 zeigen einen Dübel mit einem Keilkörper (150), der im Wesentlichen aus einer Zugstange (161) und einem Ziehkeil (160) besteht. Bei einem noch nicht in der Bohrung (130) fixierten Dübel sitzt der Ziehkeil (160) in einer z.B. konischen Ausnehmung (54), die sich nach unten aufweitet. Am Ziehkeil (160) ist eine Zugstange (161) über eine Sollbruchstelle, z.B. eine dünne Taille (162), starr verbunden. Die Zugstange (161) ist in dem Bereich, der aus dem Dübel oben herausragt, als ein von einem Werkzeug z.B. formschlüssig greifbaren Zuganker (163) ausgestaltet.

Soll nun der Dübel in der unteren Deckplatte verklemmt werden, wird der Ziehkeil (160) über die Zugstange (161) nach oben gezogen. Sobald die - z.B. zwei bis sechs - Klemmelemente (51) in der Bohrung (115) fest eingespannt sind, bricht die Taille (162) als Sollbruchstelle. Die Zugstange (161) wird aus der zentralen Bohrung des Dübels entfernt. Der Dübel sitzt nun zumindest in der unteren Deckplatte (111) fest.

In den Figuren 11 und 12 ist eine Variante - unabhängig vom Dübeltyp - dargestellt, die teilweise schon aus den Figuren 1 bis 5 in Verbindung mit dem dort beschriebenen Dübel bekannt ist. Anstelle des Ziehkeils (160) nach den Figuren 9 und 10 hat der Keilkörper (150) eine Zugkugel (165). Bei einem noch nicht in der Bohrung (130) fixierten Dübel sitzt die Zugkugel (165) in einer Parknut (166). Zum Verklemmen der Klemmelemente (51) wird die Zugkugel (165) nach oben gezogen, bis sie in einer weiteren Nut (167) zur Anlage kommt. Oberhalb der Zugkugel reißt dann die Sollbruchstelle (162), vgl. Figur 12.

Die Varianten aus den Figuren 9 bis 12 stellen einfache Schiebekeilgetriebe dar.

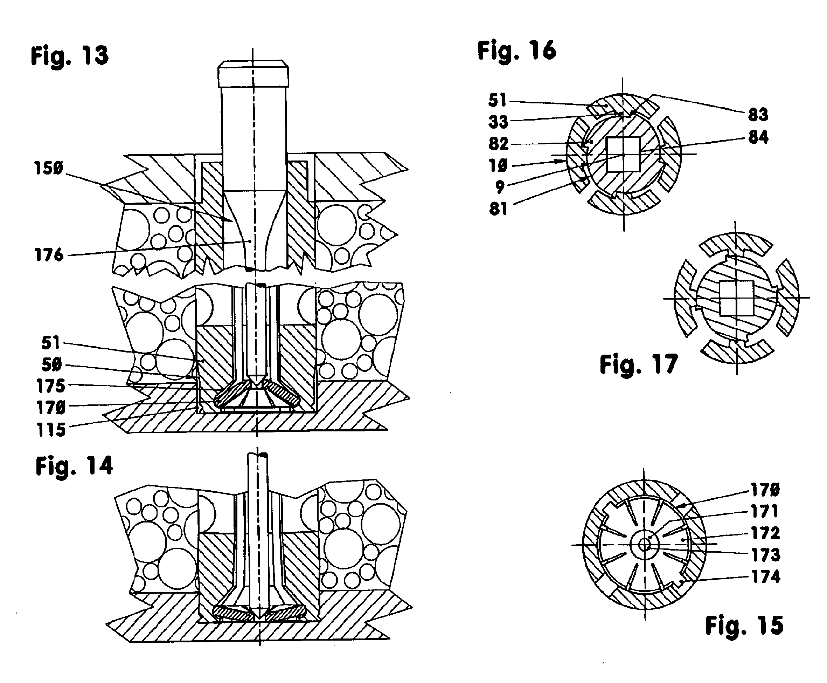

Alternativ hierzu wird in den Figuren 13 bis 15 ein Keilkörper (150) mit Spreizgetriebe gezeigt. Zentrales Bauteil dieses Spreizgetriebes ist eine Membranfeder (170), vgl. Figur 15.

Die Membranfeder (170) ist beispielsweise eine elastische Scheibe aus einem Ring (171) mit davon radial abstehenden Zungen (172). Zwischen dem Ring (171) und den Zungen (172) können ggf. druckstabile Filmgelenke angeordnet sein. Im Ausführungsbeispiel hat der Ring (171) eine zentrale Bohrung (173). Ein Teil derjenigen Zungen (172), die in den Bereichen der Längsschlitze der Klemmzone (50) liegen, hat Nasen (174), die in die Längsschlitze hineinragen, vgl. Figur 15.

Die Membranfeder (170) sitzt in einer, im unteren Bereich der Klemmelemente (51) gelegenen, Ringnut (175). Bei einem noch unverformten Dübel ist die Membrane (170) nach oben gewölbt, d.h. der Ring (171) liegt oberhalb der Zungen (172). Zum Verklemmen der Klemmelemente (51) wird die Membranfeder über eine Schubstange (176) nach unten gedrückt. Die Schubstange (176) ragt dazu mit ihrem unteren Ende in die Bohrung (173) der Membranfeder (170) hinein. Die Membranfeder wölbt sich in einer Schnappbewegung nach unten. Am Boden der Bohrung (115) legt sich der Ring (171) an. Die Membranfeder (170) hat eine stabile Endlage eingenommen. Die spreizelemente (51) sitzen fest in der Bohrung (115). Die Schubstange (176) wird nach dem Verklemmen der Membranfeder (170) nach oben herausgenommen.

Demnach weist der Keilkörper (60, 150) neben mindestens einem Getriebeelement (160, 165, 170) zur Erzeugung einer Keil- oder Spreizwirkung mindestens ein Betätigungselement (161, 176) auf.

Selbstverständlich ist das Prinzip des Dübels nicht auf Dübel mit zumindest bereichsweise zylindrischer Außenkontur beschränkt. Der Dübel kann z.B. auch für eine Ausnehmung konstruiert werden, die einen zumindest abschnittsweise langlochförmigen oder ovalen Querschnitt hat.

Alle Teile des Dübels, die oberhalb der Klemmzone (50) liegen, sind hier nur beispielhaft dargestellt. Der einzelne Dübel kann sich oberhalb der Klemmzone (50) an der oberen Deckplatte oder Stützkernzwischenlage (121) in jeder beliebigen Art und Weise abstützen.

Die Figuren 16 und 17 zeigen einen Querschnitt eines Dübels im Bereich der Abstützzone (50), bei dem der Keilkörper (81) schon vor dem Dübeleinbau im Spreizkörper (10) angeordnet ist. Der Dübel wird somit vormontiert in die Bohrung (130) eingesetzt, vgl. Figur 4. Dieser Dübel benötigt kein Zugelement (150). Die Keilzonen des Keilkörpers (81) sind hier z.B. vier Exzenterelemente (82), die durch ein Verdrehen - um die Längsachse (9) des Dübels - die Spreizelemente (51) des Spreizkörpers (10) ausspreizen. Die Exzenterelemente (82) gleiten hierbei an Nocken (33) entlang, die an die Spreizelemente (51) angeformt sind.

Die Verdrehbewegung des Keilkörpers (81) im Spreizkörper (10) kann z.B. durch Rastelemente oder Anschläge (83) begrenzt und/oder arretiert werden. In den Figuren 16 und 17 liegen die Rastelemente z.B. in einer anderen - hier nicht sichtbaren - Schnittebene. Um den Keilkörper (81) der Abstützzone (50) um die Achse (9) schwenken zu können, hat der Keilkörper (81) z.B. eine zentrale Vierkantausnehmung (84).

### Bezugszeichenliste:

- 9: Mittellinie des Dübels

- 10: Spreizkörper
- 11: Außenwandung, zylindrisch, Kontur

- 21: Innenwandung, Bohrung
- 22: Stirnfläche
- 23: Außenkante

- 29: Längsschlitze
- 30: Hintergriffsabschnitt
- 31: Hintergriffselemente
- 32: Hintergriffsflankenabschnitte
- 33: Nocken

- 40: Verrastungszone
- 41: Raststollen
- 42: Rastausnehmungen, Rastkerben
- 43: Rastflanken
- 44: Gleitflanken
- 45: Nutgrund
- 49: Entlastungsschlitze

- 50: Abstützzone, Fußabschnitt, Abstützabschnitt
- 51: Klemmelemente, Spreizelemente
- 52: Stirnfläche, unten
- 53: Ausnehmung, zylindrisch; Kammer
- 54: Ausnehmung, kegelstumpfmantelförmig; Kammer
- 55: Ausnehmung, zylindrisch
- 56: Kerbe
- 57: Klemmsteg

- 58: Außenkontur, kegelstumpfmantelförmig
- 59: Längsschlitze

- 60: Keilkörper
- 61: Bohrung
- 62: Innengewinde
- 63: Stirnfläche, oben

- 70: Sitzabschnitt, Zylinderzone
- 71: Widerhakenstege, Umlaufstege, Oberflächenstruktur
- 72: Stützflanke
- 73: Rutschflanke

- 80: Spreizabschnitt, Keilzone
- 81: Keilkörper
- 82: Exzenterelemente
- 83: Anschläge
- 84: Vierkantausnehmung
- 85: Zwischenabschnitt

- 90: Verrastungszone
- 91: Raststollen
- 92: Rastausnehmungen, Rastkerben
- 93: Stützflanken, eben
- 94: Gleitflanken
- 96: Boden, Stirnfläche, kolbenartiges Ende

- 100: Sandwichplatte, Leichtkern-Verbundplatte; flächiges Bauteil in Stützkernbauweise
- 101: Deckplatte, oben
- 102: außenliegende Oberfläche

- 103: innenliegende Oberfläche
- 105: Bohrung
- 106: Kante, innenliegend

- 111: Deckplatte, unten
- 113: innenliegende Oberfläche
- 115: Sacklochbohrung, Sacklochausnehmung
- 119: Boden von (115)

- 121: Stützkernzwischenlage, Stützkern, Wabenkern, Schaumstoffkern
- 125: Bohrung

- 130: Gesamtbohrung, Ausnehmung

- 150: Keilkörper mit (160) oder (165), Zugelement

- 160: Ziehkeil
- 161: Zugstange
- 162: Taille, Sollbruchstelle
- 163: Zuganker
- 165: Zugkugel
- 166: Parknut
- 167: Nut

- 170: Membranfeder
- 171: Ring
- 172: Zungen
- 173: Bohrung
- 174: Nase
- 175: Ringnut
- 176: Schubstange, Druckstab

## Patentansprüche

1. Dübel zur Befestigung an - in Stützkernbauweise gefertigten
- flächigen Bauteilen (100) mit einer ersten (101) und einer zweiten Deckplatte (111) und mindestens einer Stützkernzwischenlage (121),
- wobei der Dübel mindestens einen Spreizkörper (10) und mindestens einen mindestens einteiligen Keilkörper (60, 150) umfasst,
- wobei der Keilkörper (60, 150) in den Spreizkörper (10) zumindest bereichsweise einsteckbar ist,
- wobei der Dübel zumindest bereichsweise in eine Ausnehmung (130) setzbar ist,
- wobei der Spreizkörper (10) eine Abstützzone (50) mit mindestens zwei spreizbaren Klemmelementen (51) hat,
- wobei der Keilkörper (150) mindestens ein eine Zug-, Schub-oder Verdrehbewegung übertragendes Getriebeelement (161, 176) aufweist,
- wobei der Keilkörper (150) mindestens ein Getriebeelement (160, 165, 170, 82) zur Spreizung der Klemmelemente (51) aufweist,
- wobei die Getriebeelemente (160, 165, 170, 82) vor und nach der Dübelmontage vollständig innerhalb der Abstützzone (50) angeordnet sind,
- wobei die die Zug-, Schub- oder Verdrehbewegung übertragenden Getriebeelemente (161, 176) in der Ausnehmung (130) lösbar mit den spreizenden Getriebeelementen (160, 165, 170, 82) wirkverbunden sind und
- wobei die Abstützzone (50) des Spreizkörpers (10) - mit dem oder den Getriebeelementen (160, 165, 170, 82) des Keilkörpers (150) ein Getriebe bildend - in der Sacklochausnehmung (115) der zweiten Deckplatte (111) radial verklemmt anlegbar ist.

2. Dübel gemäß Anspruch 1, **dadurch gekennzeichnet, dass** die Klemmelemente (51) und das oder die Getriebeelemente (160, 165) ein Schiebekeilgetriebe bilden.

3. Dübel gemäß Anspruch 1, **dadurch gekennzeichnet, dass** zwischen dem Getriebeelement (160, 165) zur Erzeugung einer Keilwirkung und dem als Betätigungselement bezeichneten Zug übertragenden Getriebeelement (161) eine Sollbruchstelle (162) angeordnet ist.

4. Dübel nach mindestens einem der vorangegangenen Ansprüche, **dadurch gekennzeichnet, dass** das Betätigungselement ein Zug- (161) oder ein Druckstab (176) ist.

5. Dübel gemäß Anspruch 1, **dadurch gekennzeichnet, dass** die Klemmelemente (51) und das oder die Getriebeelemente (170) ein Spreizgetriebe bilden.

6. Dübel gemäß Anspruch 5, **dadurch gekennzeichnet, dass** ein Getriebeelement des Spreizgetriebes eine Membranfeder (170) ist.

7. Dübel gemäß Anspruch 1, **dadurch gekennzeichnet, dass** die Klemmelemente (51) und mindestens ein Getriebeelement (82) ein Exzentergetriebe bilden.

8. Dübel gemäß Anspruch 1, **dadurch gekennzeichnet, dass** der Spreizkörper (10) zumindest im Bereich der zweiten Deckplatte (111) rohrförmig gestaltet ist.

9. Dübel gemäß Anspruch 1, **dadurch gekennzeichnet, dass** der Spreizkörper (10) zur Ausbildung der Klemmelemente (51) im Bereich der Abstützzone (50) zumindest bereichsweise längsgeschlitzt ist.

## Claims

1. A wall anchor (dowel) to be installed in planar components (100) of a supporting-core-type construction, said components comprising first and second outer cover layers (101 and 111, respectively) and at least one supporting-core intermediate layer (121), wherein
- said anchor comprises at least one spreader body (10) and a wedge body (60, 150) consists of at least one piece;
- wedge body (60, 150) is adapted to be inserted in spreader body (10) for at least part thereof;
- said anchor is adapted to be set at least partly into an opening (130);
- spreader body (10) has a supporting zone (50) including at least two spreadable clamping elements (51);
- wedge body (150) comprises at least one transmission element (161, 176) adapted to transmit a pulling, pushing or twisting movement;
- wedge body (150) comprises at least one transmission element (160, 165, 170, 82) adapted to spread clamping elements (51);
- transmission elements (160, 165, 170, 82) are disposed completely within supporting zone (50) before and after installing said anchor;
- transmission elements (161, 176) transmitting the pulling, pushing or twisting movement are disposed in opening (130) in a manner to be releasable from, and operatively engageable with, spreadable transmission elements (160, 165, 170, 82);
and
- supporting zone (50) of spreader body (10) cooperates with the one or several transmission element (160, 165, 170, 82) of wedge body (150) in forming a transmission and is adapted to internally engage, and radially clamp to, blind hole opening (115) in second cover plate (111).

2. Wall anchor as claimed in claim 1, **characterized in that** clamping elements (51) and the one or several transmission elements (160, 165) form a sliding-wedge-type transmission.

3. Wall anchor as claimed in claim 1, **characterized in that** a predetermined breakaway site (162) is provided between transmission element (160, 165) generating a wedging effect and transmission element (161) designated as actuating element.

4. Wall anchor as claimed in at least one of the preceding claims, **characterized in that** said actuating element constitutes a pulling rod (161) or a pressure rod (176).

5. Wall anchor as claimed in claim 1, **characterized in that** clamping elements (51) and the one or several transmission elements (170) cooperate to form a spreading-type transmission.

6. Wall anchor as claimed in claim 5, **characterized in that** one of the transmission elements of said spreading-type transmission comprises a diaphragm spring (170).

7. Wall anchor as claimed in claim 1, **characterized in that** clamping elements (51) cooperate with at least one transmission element (82) in forming an excentric-type transmission.

8. Wall anchor as claimed in claim 1, **characterized in that** spreader body (10) is tubular in shape at least in the region of second cover plate (111).

9. Wall anchor as claimed in claim 1, **characterized in that** clamping elements (51) are formed by longitudinal slits extending through spreader body (10) along at least parts of the length thereof in the region of supporting zone (50).

## Revendications

1. Cheville destinée à être fixée sur des éléments plans de construction sandwich (100), composés d'une première plaque de recouvrement (101) et d'une deuxième plaque de recouvrement (111) et au moins d'une couche intermédiaire de renforcement (121),
- la cheville comprenant au moins un corps d'expansion (10) et au moins un corps cunéiforme (60, 150) fait au moins d'une seule pièce,
- le corps cunéiforme (60, 150) pouvant être inséré au moins partiellement dans le corps d'expansion (10),
- la cheville pouvant être posée au moins partiellement dans une cavité (130),
- le corps d'expansion (10) ayant une zone d'appui (50) avec au moins deux éléments de serrage (51) écartables,
- le corps cunéiforme (150) présentant au moins un élément d'engrenage (161, 176) transmettant un mouvement de traction, de poussée ou de rotation,
- le corps cunéiforme (150) présentant au moins un élément d'engrenage (160, 165, 170, 82) pour écarter les éléments de serrage (51),
- les éléments d'engrenage (160, 165, 170, 82) sont disposés complètement à l'intérieur de la zone d'appui (50) avant et après le montage des chevilles,
- les éléments d'engrenage (161, 176) qui transmettent le mouvement de traction, de poussée ou de rotation étant reliés fonctionnellement et de manière amovible aux éléments d'engrenage écarteurs dans la cavité (130) et
- la zone d'appui (50) du corps d'expansion (10) qui forme un engrenage avec le ou les éléments d'engrenage (160, 165, 170, 82) du corps cunéiforme (150) pouvant s'appliquer, de manière à être bloquée radialement, dans le trou borgne (115) de la deuxième plaque de recouvrement (111).

2. Cheville selon la revendication 1, **caractérisée en ce que** les éléments de serrage (51) et l'élément ou les éléments d'engrenage (160, 165) forment un engrenage à clavette coulissante.

3. Cheville selon la revendication 1, **caractérisée en ce qu'**un point destiné à la rupture (162) est prévu entre l'élément d'engrenage (160, 165), destiné à produire un effet de coin, et l'élément d'engrenage (161) appelé élément d'actionnement qui transmet un mouvement de traction.

4. Cheville selon au moins une des revendications précédentes, **caractérisée en ce que** l'élément d'actionnement est une tige de tirage (161) ou une tige de pression (176).

5. Cheville selon la revendication 1, **caractérisée en ce que** les éléments de serrage (51) et le ou les éléments d'engrenage (170) forment un mécanisme d'engrenage extensible.

6. Cheville selon la revendication 5, **caractérisée en ce qu'**un élément d'engrenage du mécanisme d'engrenage extensible est un ressort à membrane (170).

7. Cheville selon la revendication 1, **caractérisée en ce que** les éléments de serrage (51) et au moins un élément d'engrenage (82) forment un mécanisme à excentrique.

8. Cheville selon la revendication 1, **caractérisée en ce que** le corps d'expansion (10) a la forme d'un tube, au moins dans la zone de la deuxième plaque de recouvrement (111).

9. Cheville selon la revendication 1, **caractérisée en ce que** le corps d'expansion (10) présente des fentes longitudinales dans la zone d'appui (50), au moins par sections, pour la formation des éléments de serrage (51).
